(19) Europäisches Patentamt
European Patent Office
Office européen des brevets

(11) **EP 2 547 413 B1**

(12) **EUROPEAN PATENT SPECIFICATION**

(45) Date of publication and mention
of the grant of the patent:
**21.12.2016 Bulletin 2016/51**

(51) Int Cl.:
**B01D 17/04** (2006.01)

(21) Application number: **11709298.1**

(22) Date of filing: **11.03.2011**

(86) International application number:
**PCT/US2011/028037**

(87) International publication number:
**WO 2011/115826 (22.09.2011 Gazette 2011/38)**

(54) **SEPARATION METHOD WITH A COALESCER DEVICE**

ABSCHEIDUNGSVERFAHREN MIT EINEM COALESCERELEMENT

PROCÉDÉ DE SÉPARATION AVEC UN DISPOSITIF COALESCEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.05.2010 US 331011 P
15.03.2010 US 313844 P**

(43) Date of publication of application:
**23.01.2013 Bulletin 2013/04**

(73) Proprietor: **Dow Global Technologies LLC
Midland, MI 48674 (US)**

(72) Inventors:
• **KAR, Kishore, K.
Midland
MI 48640 (US)**
• **SOMASI, Madan
Carmel
IN 46074 (US)**
• **COPE, Richard, F.
Midland
MI 48642 (US)**
• **NIES, Katherine, E.
Madland
MI 48642 (US)**

(74) Representative: **Beck Greener
Fulwood House
12 Fulwood Place
London WC1V 6HR (GB)**

(56) References cited:
**DE-A1- 3 401 934          FR-A1- 2 697 443
US-A- 4 017 389            US-A- 4 454 077
US-A- 5 133 870            US-A- 5 897 772
US-A1- 2004 099 606**

## EP 2 547 413 B1

**Description**

BACKGROUND OF THE INVENTION

Field of the Invention.

The present invention generally relates to a separation method employing the coalescer device for coalescing material comprising a dispersed liquid phase from an emulsion.

Description of the related art.

Chemical and allied industries need to separate or coalesce a dispersed liquid phase from an emulsion comprising the dispersed liquid phase and a continuous liquid phase, where the dispersed and continuous liquid phases are substantially immiscible in each other. A typical example of such an emulsion is an oil-water emulsion. Crude oil taken from oil deposits typically is contaminated with water in the form of oil-water emulsions. In fact water is the largest volume waste stream generated by oil and natural gas producers. The crude oil must be removed from the oil-water emulsions before the crude oil can be transported or refined and to meet clean water standards before the water is discharged. Other examples of such emulsions include a variety of immiscible organic and/or aqueous phases such as isopropanol-hexane, toluene-water, and methacrylate-water.

In separations art terminology, a "perfect cut" means separating all of a dispersed phase from a continuous phase wherein the dispersed and continuous phases comprise an emulsion. For example with oil-water emulsions a perfect cut means there would be a clear demarcation line between a separated oil layer and separated water layer without a rag layer between them. The rag layer would contain minute levels of dispersed oil in water or vice versa, depending on whether the oil-water emulsion comprised a oil-based dispersed phase in a water-based continuous phase or vice versa. In batch and continuous gravity separation processes, achieving a perfect separation takes too long and produces too small an incremental yield of separated material. Thus a practical objective for an oil-water separation process in the oil recovery industry is to maintain an acceptably small size rag layer while achieving satisfactory quality of separated oil, water, or both, as the case may be (e.g., separated oil can be taken from the top of a separations tank, water from a bottom of the separations tank, or both). Split ratio and oil separation efficiency are two parameters than can be used to characterize effectiveness of the oil-water separation process and purities of separated layers obtained therefrom.

A number of dispersed liquid phase separator devices and separation methods have been tried on commercial scale in industry for this purpose. Examples of such devices and methods for separating oil-water emulsions are a gravity-based separation and decantation method; use of a coalescer device such as an electrostatic coalescer system (ESCS); a downhole oil water separator (DOWS) such as a hydrocyclone device; and a dual action pumping system (DAPS). Industry employs the coalescer device to accelerate rate of coalescence of oil droplets. The hydrocyclone device employs centrifugal force to drive the heavier water to an outer area of the device, leaving the lighter oil in an inner area of the device. The dual action pumping system pumps oil and a minimal amount of water (e.g., fresh water or seawater) to a surface with an up-pump operation, and then pumps most of the up-pumped water down into a water well. While the coalescer device (e.g., ESCS), DOWS, and DAPS improve separation of oil from water over separations with gravity-only based devices, and even small improvements of oil separation rates of a few percent are significant and valuable to these industries, the coalescer device, DOWS, and DAPS remain relatively slow, inefficient, or both.

Other oil-water separator devices and separation methods have been tried for separating oil from oil-water emulsions. At least one of these employs a draft tube. Japanese Patent Application Number JP 55-132608 mentions, among other things, a separator for oil and water that separates oil by a mechanism wherein an air lift is formed with an air feed in a draft tube (i.e., "draft cylinder") disposed in an outer cylinder. The outer cylinder is for discharging and circulating a discharging liquid and has a multiple cylinder structure. The draft tube is constructed by alternately connecting honeycomb filling isthmus portions and extending portions with taper. Construction of the draft tube is designed to subject a liquid passing therethrough to air columns exerting high pressure, shearing stress, and other forces.

Draft tubes have also been employed in devices for mixing liquids together. United States (U.S.) Patent Number 4,981,366 mentions, among other things, a mixing device for mixing liquids within a vessel. The device utilizes at least one pump in fluidic communication with the liquid in the vessel to create a streamflow of the liquid into a draft tube disposed within the vessel, thereby mixing the liquids.

The draft tubes of US 4,981,366 and JP 55-132608 devices each lack an impeller disposed therein. Impellers disposed within draft tubes are known, however, for mixing a gas with a liquid.

A draft tube having an impeller disposed therein has been employed as a means for mixing air and a contaminated dry-cleaning liquid in a solvent stripping device and operation to strip a heavier-than-water liquid from water. German Patent Application Number DE 3401934 A1 mentions, among other things, a solvent stripping device for treating water contaminated with a higher specific gravity liquid such as wastewater from a dry cleaning operation. Referring to numbered and unnumbered features of the solvent stripping device illustrated in Figure 1 of DE 3401934 A1, the solvent stripping device comprises, among other things, an inner vessel (11). Inner vessel (11) has disposed therein a bell (38) and tube body (34). The tube body (34) has disposed therein a conveying device comprising shaft (48) having at its bottom end a propeller (49). An aeration chamber is disposed within bell (38) of the inner vessel (11) above liquid surface (36). During operation of the solvent stripping device an air stream is passed through the aeration chamber in bell (38) and simultaneously the conveying device (48/49) sprays liquid (contaminated water) from inner vessel (11) into the air stream, thereby mixing the contaminated water and the air stream together and allowing stripping of the higher specific gravity liquid from the contaminated water.

A draft tube having an impeller disposed therein has also been employed in another device for mixing a gas and liquid together. Reissued U.S. Patent Number RE 32,562 and its parent patent US 4,454077 mention, among other things, a device for mixing a gas and a liquid together. The device comprises, among other things, a vessel, a draft tube (i.e., "cylindrical hollow draft member") open at both ends and having an upper end that is conically flared, and an axial flow downflow first impeller positioned within the draft tube and connected to a rotatable shaft. As shown in the only Figure, the first impeller can be the helical impeller (6).

Accordingly, the above art shows that a device comprising a draft tube having an impeller disposed therein may be employed in a device for mixing a gas with a liquid, either as an end in itself or as a prelude to stripping water from a resulting air/contaminated mixture having a heavier than water solvent. The art does not teach or suggest, and a person of ordinary skill in the art would not be motivated to try or know how to construct, a coalescence device comprising a draft tube having an impeller disposed in the draft tube or employ it in a coalescence method of separating two substantially immiscible liquids from each other.

Chemical and allied industries need an improved coalescer device and separation method for removing a dispersed liquid phase from an emulsion comprising the dispersed liquid phase and a continuous liquid phase, where the dispersed and continuous liquid phases are substantially immiscible in each other. Preferably the improved coalescer device would be of simple construction, mechanically easy to operate, have a smaller real estate footprint per unit volume of coalesced discontinuous liquid phase material produced, and provide a separation method that is relatively rapid and efficient without employing high pressures or aeration. More preferably such a coalescer device and method would be adaptable for use in land-based and offshore oil recovery operations.

BRIEF SUMMARY OF THE INVENTION

In a first embodiment, the present invention relates to the use in a method of separating a first liquid from an emulsion of a coalescer device comprising a container, draft tube and a means for causing a vertical flow of fluid (vertical flow causing means) comprising a helical impeller which is rotatable and comprises a first helical element. The first helical element has spaced-apart leading and trailing edges; a longitudinal axis; a length ($L_e$) along its longitudinal axis; an angle of twist ($T_e$) of from 90 degrees (°) to 360° about its longitudinal axis; a diameter ($D_e$) perpendicular to its longitudinal axis; and being dimensioned so as to establish a configuration of the first helical element characterizable by a mathematical relationship between each $L_e$ and $D_e$ of $D_e \leq L_e \leq 2D_e$. An emulsion is contained in the container, the emulsion comprising a first liquid in a dispersed phase and a second liquid in a continuous phase, the first and second liquids being immiscible in each other; the emulsion having an initial content of the second liquid and being in need of separation. The draft tube is disposed inside the container and is oriented essentially vertically in the emulsion; and the helical impeller is disposed inside the draft tube and operable for causing a vertical flow of fluid therethrough (i.e., through the draft tube), the coalescer device being operable for coalescing a first liquid from an emulsion when the emulsion is disposed in the container in operative contact with the draft tube and vertical flow causing means. The method comprises rotating the helical impeller disposed within the draft tube at a rotation rate of 30 to 120 revolutions per minute and causing a vertically-directed flow of the emulsion through the draft tube and thereby coalescing together of at least some of the first liquid from the emulsion so as to form a coalesced first liquid layer having a reduced content of the second liquid, the reduced content of the second liquid of the coalesced first liquid layer being lower than the initial content of the second liquid of the emulsion.

In a further embodiment the present invention is a method of separating solid particles from a liquid comprising an emulsion, the method comprising activating a means for causing a vertical flow of fluid (vertical flow causing means) disposed within a draft tube, which in turn is immersed in a mixture of solid particles in an emulsion contained in a container; the mixture having an initial content of the solid particles and an initial content of the emulsion and being in need of separation; the draft tube being oriented essentially vertically in the mixture and the activated vertical flow causing means causing a vertically-directed flow of the mixture through the draft tube, and thereby concentrating together of at least some of the solid particles from the mixture so as to form a concentrated solid particles layer having a reduced content of the emulsion and a concentrated emulsion layer having a reduced content of the solid particles, the reduced content of the emulsion of the concentrated solid particles layer being less than the initial content of the emulsion in the mixture and the reduced content of the solid particles of the concentrated emulsion layer being less than the initial content of the solid particles in the mixture.

As used herein, the terms "coalescing," "coalesced," and the like refer to a combining, combined, and the like of small globules of the first liquid of the discontinuous phase (e.g., oil) into a united whole, which resulting combination typically comprises a layer of first liquid from the discontinuous phase. The layer of first liquid from the discontinuous phase forms on top of a layer of mostly second liquid from the continuous phase when density of the first liquid is lower than density of the second liquid. The layer of first liquid from the discontinuous phase forms on bottom of a layer of the second liquid from the continuous phase when density of the first liquid is higher than density of the second liquid. In any event sometimes there can be a rag layer between the layers.

The term "emulsion" means an intimate suspension of small globules (e.g., droplets) of a first liquid comprising a discontinuous phase in a second liquid comprising a continuous phase.

The term "essentially vertically" means oriented at an angle of from 75 degrees to 90 degrees with respect to a horizontal plane.

The term "rotating" means movement about an axis of the impeller at a rotation rate and in a direction effective for facilitating the coalescing of the first liquid from the dispersed phase of the emulsion.

The term "substantially immiscible" means has a solubility value of less than 5 weight percent.

The term "vertically-directed flow" or "vertical flow" means a movement of a material in an essentially upward route towards a higher position or essentially downward route towards a lower position. Direction of flow is upward when the aforementioned material of the discontinuous phase has a lower density than density of the aforementioned material of the continuous phase and the direction of flow is downward when the material of the discontinuous phase has a higher density than density of the material of the continuous phase.

The term "content of the second liquid" means an amount of a non-gaseous fluid comprising the second liquid relative to a total amount of first and second liquids, expressed as a percent.

The use in a method of separating a first liquid from an emulsion of a coalescer device of the first embodiment are independently useful for coalescing the first liquid from a dispersed phase thereof in the emulsion. In its broadest embodiment the method of separating a first liquid from an emulsion and coalescer device lack high pressure and aeration and yet are capable of coalescing the first liquid from the emulsion relatively rapidly and efficiently. The coalescer device employed in the method of separating a first liquid from an emulsion is of simple construction, mechanically easy operation, and adaptable for use in land-based and offshore oil recovery operations. In some embodiments the invention is characterizable by a counterintuitive discovery by the inventors that rotating the impeller so as to produce the vertical flow of the emulsion does not cause further mixing of the first and second liquids of the emulsion but instead is effective for improving rate of coalescing the first liquid from the dispersed phase thereof from the emulsion. The rotation is in a direction to produce an upward-directed or downward-directed flow depending on relative densities of the first and second liquids. When density of the first liquid is lower than density of the second liquid, rotation is in a direction so as to produce the upward-directed flow. When density of the first liquid is higher than density of the second liquid, rotation is in a direction so as to produce the downward-directed flow. The effective low rotation rate is substantially lower than that necessary for mixing the first and second liquids together to give an emulsion thereof. At a given time, t, the resulting improved coalescing rate coalesces at least 20 percent more first liquid after 40 minutes (and coalesces at least 100 percent more first liquid after just 20 minutes) than a gravity only-based coalescing rate, where each rate is determined with a same emulsion and by measuring respective times for producing the coalesced first liquid layer of a same height.

Advantageously the invention method of separating solid particles from a liquid comprising an emulsion accelerates rate of separating solid particles from the emulsion. For example, oil sands fine tailings can take years to separate from water by gravity-induced settling alone. The invention method of separating solid particles from a liquid comprising an emulsion accelerates the rate of separating the oil sands fine tailings from water in such a way that the separation can be performed in a matter of hours or days.

The present invention is especially useful in applications for coalescing any first liquid from a dispersed phase thereof in the emulsion. The present invention is especially useful in applications for removing oil from water or water from oil in an oil-water emulsion. For example, present invention is especially useful in applications for coalescing oil from fresh water-contaminated crude oil obtained from land-based oil deposits (e.g., recovery of bitumen from oil sands) and seawater-contaminated crude oil obtained from offshore oil deposits, both in preparation of transporting and refining the crude oil.

Additional embodiments are described in accompanying drawing(s) and the remainder of the specification, including the claims.

BRIEF DESCRIPTION OF THE DRAWING(S)

Some embodiments of the present invention are described herein in relation to the accompanying drawing(s), which will at least assist in illustrating various features of the embodiments.

Figure (Fig.) 1 shows an example of a more preferred embodiment of the coalescer device of the first embodiment.
Figure 2A (Fig. 2A) and Fig. 2B show some examples of preferred embodiments of the helical impeller.
Fig. 3 shows an example of a preferred embodiment of the helical element.
Fig. 4 shows an idealized example of a more preferred continuous-flow embodiment of the coalescer device of the first embodiment.

## DETAILED DESCRIPTION OF THE INVENTION

The present invention relates to the use in a method of separating a first liquid from an emulsion of a coalescer device as summarized above. In some embodiments the coalescer device further comprising at least one more container, at least one more draft tube, at least one more means for causing a vertical flow of fluid, and at least one means for sequentially transferring a liquid from container to container, wherein there is one such draft tube disposed inside each container and one such vertical flow causing means disposed inside each draft tube and operable for causing a vertical flow of fluid therethrough. In some embodiments the vertical flow causing means comprises an impeller and two or more vertically-oriented baffles, the impeller and two or more vertically-oriented baffles being disposed within and spaced apart from the draft tube in such a way that rotation of the impeller about a vertical axis causes a flow of fluid directed vertically by the two or more vertically-oriented baffles through the draft tube. An example of the coalescer device comprising such vertical flow causing means is described later.

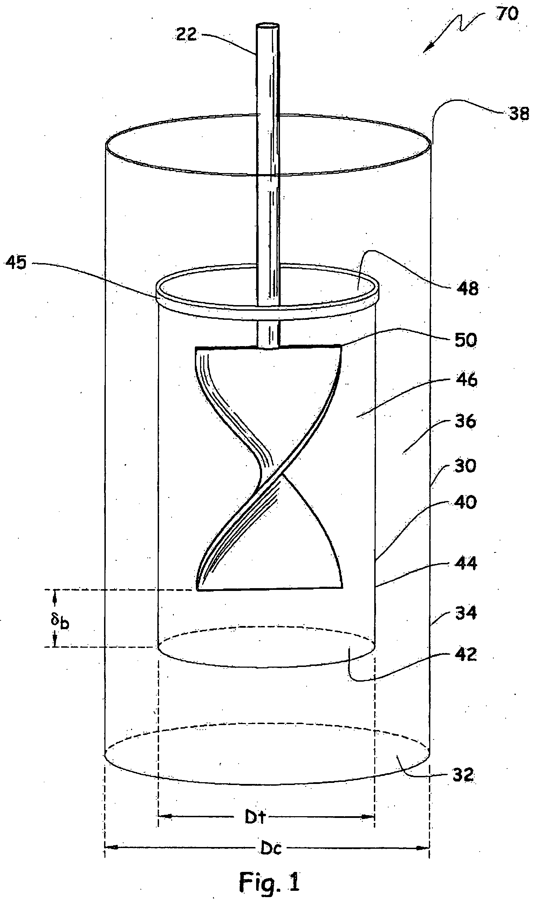

The vertical flow causing means comprises at least one helical impeller. Each helical impeller is shaped in such a way that rotation of the helical impeller(s) about a vertical axis causes the vertical flow of fluid-through the draft tube even in absence of any vertically-oriented baffles. Preferably no vertically-oriented baffles are employed with the helical impeller(s). The vertical flow causing means comprises a helical impeller (rotatable) that is vertically disposed within and spaced apart from the draft tube operable for causing a vertical flow of fluid therethrough. The helical impeller can be of a continuous construction (i.e., monolithic) or comprised of a plurality of helical impeller elements, the helical impeller elements each having leading and trailing edges being sequentially operatively connected to each other such that a leading edge of one of the helical impeller elements is aligned parallel to and in operative connection with the trailing edge of an adjacent one of the helical impeller elements. Preferably the operative connection between adjacent helical elements comprises direct operative connection (e.g., via a weld). Total length of the helical impeller is from 0.5 times to 1.0 times length of the draft tube. More preferably the helical impeller is rotatable and comprises a first helical element, the first helical element being characterizable as having spaced-apart leading and trailing edges; a longitudinal axis; a length ($L_e$) along its longitudinal axis; an angle of twist ($T_e$) of from 90 degrees (°) to 360° about its longitudinal axis; a diameter ($D_e$) perpendicular to its longitudinal axis; and being dimensioned so as to establish a configuration of the first helical element characterizable by a mathematical relationship between each $L_e$ and $D_e$ of $D_e \leq L_e \leq 2D_e$. An example of the coalescer device comprising such vertical flow causing means is shown in Fig. 1 and described later.

In some embodiments the emulsion is an oil-water emulsion. In some embodiments the oil-water emulsion comprises a first liquid that is oil, and a second liquid of that is water. In other embodiments the emulsion the oil-water emulsion comprises a first liquid that is water and a second liquid that is oil. The present invention contemplates employing any oil-water emulsion, including emulsions of water and any oil. The term "oil" means a liquid hydrocarbon-containing substance that is substantially immiscible in water. Preferably the substance comprises at least 50 weight percent, more preferably at least 70 wt%, and still more preferably at least 90 wt% of the liquid hydrocarbon. Examples of oil component of the contemplated oil-water emulsions crude petroleum oil and distillates thereof, bitumen, and plant oils (e.g., corn oil, palm oil, and olive oil), and synthetic oils (e.g., silicone based lubricating oils). Preferably the oil has a lower density than the water of the oil-water emulsion being separated. The term "water" means a liquid substance having at least 90 weight percent of liquid of molecular formula $H_2O$. Examples of water component of the contemplated oil-water emulsions are distilled water, deionized water, and water from a natural source (e.g., fresh water or seawater). In some embodiments the oil-water emulsion further comprises one or more additional ingredients such as, for example, one or more of solid particles (e.g., clay or silica colloidal particles), surfactants, and oil additives.

In some embodiments the emulsion is not an oil-water emulsion but instead comprises substantially immiscible first and second liquids, the first and second liquids each being other than oil. Examples of first and second liquids other than oil are water-immiscible organic liquids other than liquid hydrocarbons (e.g., substituted liquid hydrocarbons such as aldehydes, ketones, alcohols, and esters). In some embodiments the emulsion that is not an oil-water emulsion further comprises one or more additional ingredients such as, for example, one or more of solid particles (e.g., clay or silica colloidal particles) and surfactants.

In some embodiments the emulsion is not an oil-water emulsion but instead comprises substantially immiscible gas and liquid, wherein the invention method of the second embodiment comprises degassing the emulsion so as to form a degassed liquid.

It can be convenient to illustrate herein certain features of the present invention in the context of an oil-water emulsion. A person of ordinary skill in the art would be able to readily adapt such illustrations to emulsions that are not oil-water emulsions and the present invention contemplates and intends to teach such adaptations by way of the illustrations.

In an event where there is a conflict between what is written in the present specification and what is written in a patent, patent application, or patent application publication, or a portion thereof that is incorporated by reference, what is written in the present specification controls.

In the present application, any lower limit of a range of numbers, or any preferred lower limit of the range, may be combined with any upper limit of the range, or any preferred upper limit of the range, to define a preferred aspect or embodiment of the range. Each range of numbers includes all numbers, both rational and irrational numbers, subsumed within that range (e.g., the range from about 1 to about 5 includes, for example, 1, 1.5, 2, 2.75, 3, 3.80, 4, and 5).

In an event where there is a conflict between a unit value that is recited without parentheses, e.g., 2 inches, and a corresponding unit value that is parenthetically recited, e.g., (5 centimeters), the unit value recited without parentheses controls.

The word "optionally" means "with or without." For example, "optionally, a third helical element" means with or without a third helical element.

As used herein, "a," "an," "the," "at least one," and "one or more" are used interchangeably. In any aspect or embodiment of the instant invention described herein, the term "about" in a phrase referring to a numerical value may be deleted from the phrase to give another aspect or embodiment of the instant invention. In the former aspects or embodiments employing the term "about," meaning of "about" can be construed from context of its use. Preferably "about" means from 90 percent to 100 percent of the numerical value, from 100 percent to 110 percent of the numerical value, or from 90 percent to 110 percent of the numerical value. In any aspect or embodiment of the instant invention described herein, the open-ended terms "comprising," "comprises," and the like (which are synonymous with "including," "having," and "characterized by") may be replaced by the respective partially closed phrases "consisting essentially of," "consists essentially of," and the like or the respective closed phrases "consisting of," "consists of," and the like to give another aspect or embodiment of the instant invention. In the present application, when referring to a preceding list of elements (e.g., ingredients), the phrases "mixture thereof," "combination thereof," and the like mean any two or more, including all, of the listed elements. The term "or" used in a listing of members, unless stated otherwise, refers to the listed members individually as well as in any combination, and supports additional embodiments reciting any one of the individual members (e.g., in an embodiment reciting the phrase "10 percent or more," the "or" supports another embodiment reciting "10 percent" and still another embodiment reciting "more than 10 percent."). The term "plurality" means two or more, wherein each plurality is independently selected unless indicated otherwise. The terms "first," "second," et cetera serve as a convenient means of distinguishing between two or more elements or limitations (e.g., a first chair and a second chair) and do not imply quantity or order unless specifically so indicated. The symbols "$\leq$" and "$\geq$" respectively mean less than or equal to and greater than or equal to. The symbols "$<$" and "$>$" respectively mean less than and greater than.

This specification may refer to certain well-known testing standards promulgated by certain organizations, which are referred to herein by their acronyms. The acronym "ASTM" stands for ASTM International, the name of an organization headquartered in West Conshohocken, Pennsylvania, USA; ASTM International was previously known as the American Society for Testing and Materials.

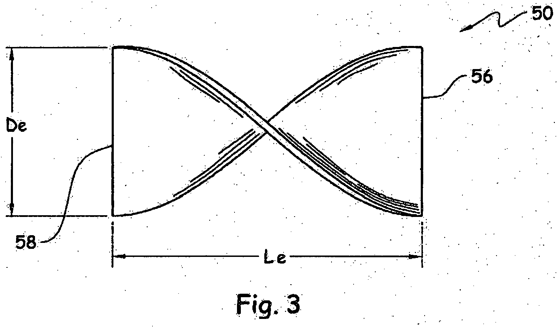

Fig. 1 shows an example of coalescer device 70 employing a helical impeller, the preferred embodiment of helical impeller being helical element 50. In Fig. 1, coalescer, device 70 comprises cylindrical shaft 22, container 30, draft tube 40, and a helical impeller that is helical element 50. Cylindrical shaft 22 is rotatable. Helical element 50 in Fig. 1 is identical to helical element 50 in Fig. 3. Container 30 has bottom portion 32 and wall portion 34, enclosed volumetric space 36, upper portion 38, and an inner diameter $D_c$. In some embodiments container 30 defines a bottom aperture (not indicated) at bottom portion 32 and a top aperture (not indicated) at upper portion 38 so as to form an open-ended cylinder. In some embodiments container 30 is sealed bottom portion 32 and defines the top aperture (not indicated) at upper portion 38 so as to form a cylinder closed at a bottom end and open at a top end. In some embodiments upper portion 38 of container 30 further defines an outlet aperture (not shown, e.g., the aforementioned top aperture) and lower portion 32 of container 30 preferably defines second liquid outlet aperture (not shown, e.g., the aforementioned bottom aperture). Also preferably a middle portion (not indicated) of container 30 defines an emulsion inlet aperture. Draft tube 40 has a longitudinal axis bottom aperture 42 and wall portion 44, outward-protruding rim 45, enclosed volumetric space 46, top aperture 48, a vertical length $L_t$ (not indicated), and an inner diameter $D_t$ (described later). Inner diameter $D_t$ of draft tube 40 preferably is about 0.7 times inner diameter $D_c$ of container 30. Helical element 50 is disposed in enclosed volumetric space 46 of draft tube 40 so as to be spaced apart from bottom portion 42 of draft tube 40 by distance $\delta_b$ and is spaced apart from wall portion 44 of draft tube 40. Diameter $D_e$ (not shown; see Fig. 3) of helical element 50 is approximately one half of inner diameter $D_t$ of draft tube 40 (i.e., $D_e = 0.5 D_t$) Distance $\delta_b$ of helical element 50 from bottom portion 42 of draft tube 40 is from 0 times to 0.5 times vertical length $L_t$ (not indicated) of draft tube 40 (i.e., $0 \, L_t \leq \delta_b \leq 0.5 \, L_t$. Helical impeller (e.g., comprising one or more helical elements 50 or being a continuous helical impeller) is dimensioned in such a way that it preferably spans from $0.5 \, L_t$ to $1.0 \, L_t$ length of draft tube 40. The terms "inner diameter" and "inside diameter" are synonymous and interchangeably used herein and the terms "outer diameter" and "outside diameter" are synonymous and interchangeably used herein.

Assemble coalescer device 70 by operatively connecting a bottom end (not indicated) of cylindrical shaft 22 to a trailing edge (e.g., 58 in Fig. 3) of helical element 50 such as, for example, by welding; and disposing draft tube 40 within enclosed volumetric space 36 of container 30, and disposing helical element 50 in enclosed volumetric space 46 of draft tube 40, and operatively connecting a top end (not indicated) of cylindrical shaft 22 to a means for rotating (e.g., a stirrer motor, not shown, described later), which together with cylindrical shaft 22 also preferably functions so as to hold helical element 50 within enclosed volumetric space 46 of, and spaced apart from, draft tube 40.

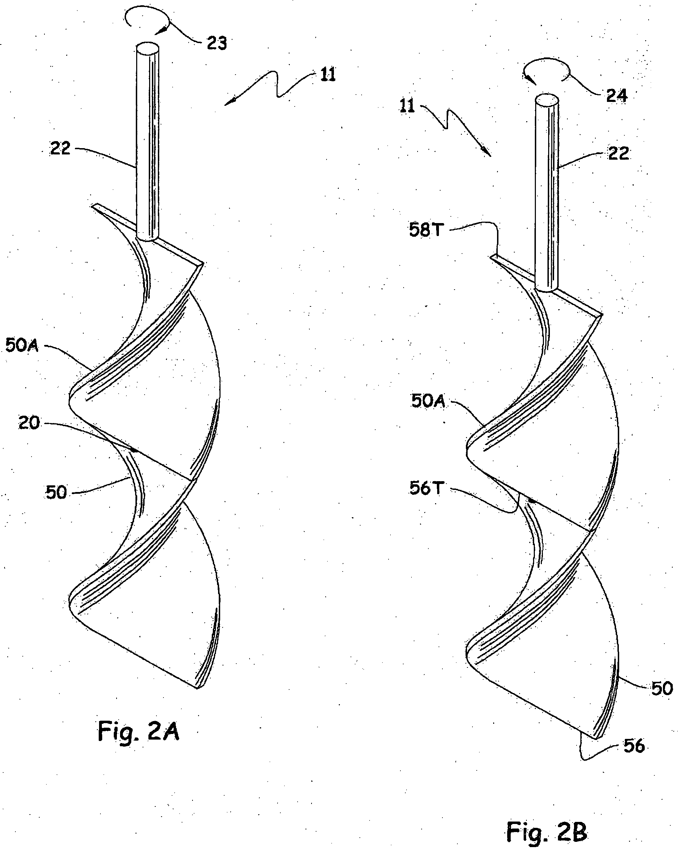

The invention separation methods can be performed in a batch process mode or continuous process mode. For example, perform a batch process mode with the separation method of separating a first liquid from an emulsion of the second embodiment employing coalescer device 70 by, for example, adding an emulsion (not shown) into enclosed volumetric space 36 of container 30 of coalescer device 70 so as to completely submerge draft tube 40 and helical element 50. Activate the means for rotating (e.g., a stirrer motor, not shown) so as to rotate helical element 50 within a portion of the emulsion (not shown) disposed within draft tube 40, rotating being at an appropriate speed and in an appropriate direction (i.e., clockwise as shown by arrow 23 in Fig. 2A or counterclockwise as shown by arrow 24 in Fig. 2B), thereby establishing an upward-directed or downward-directed flow (not shown) of the emulsion (not shown) through draft tube 40 and essentially parallel to the longitudinal axes (not shown, i.e., vertical axes) of the helical element 50 and draft tube 40, thereby coalescing at least most of the first liquid (from the dispersed phase) and second liquid (from the continuous phase) from the emulsion (not shown) so as to give a coalesced first liquid, coalesced second liquid, or both (not shown). A layer of coalesced first liquid can be collected at an upper portion 38 and a layer of coalesced second liquid at a bottom portion 32 of the container 30, or vice versa depending on relative densities of the first and second liquids. A batch process mode for separating the solid particles from the mixture of solid particles in the liquid according to the invention method of separating solid particles from a liquid can be performed in a manner similar to the foregoing description except the emulsion is replaced by the mixture.

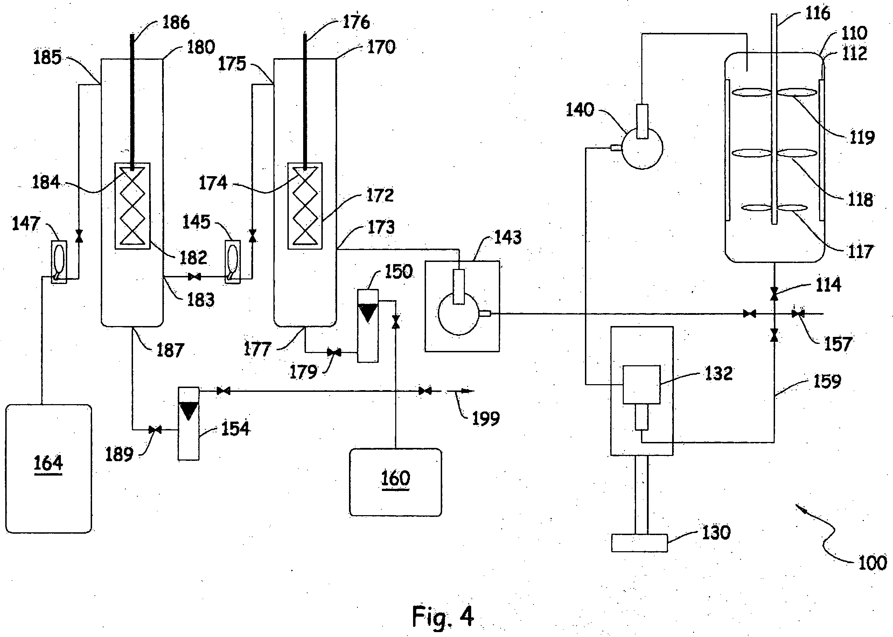

Perform a continuous process mode with the separation method of separating a first liquid from an emulsion of the second embodiment employing two coalescer devices 70 in series as illustrated later for Fig. 4.

The coalescer device employed in the invention methods (e.g., the method of separating a first liquid from an emulsion), including coalescer device 70, can be dimensioned for any scale separation method, from laboratory scale to a large field scale for use, for example, in oil recovery operation at, for example, an offshore oil platform or oil sands deposit site. A set of dimensions for laboratory scale can be multiplied by any scaling factor (e.g., 10 times, 100 times, or 222 times) to give a set of dimensions for the large field scale.

A suitable laboratory scale for helical element 50, container 30, and draft tube 40 is:

A helical element 50 having a length $L_e$ (i.e., height, the longitudinal axis of helical element 50 being vertically oriented) of 3.81 centimeters (cm) and diameter $D_e$ of 2.54 cm;
A container 30 having a height of 254 cm, an inner diameter of 6.35 cm, and an outside diameter of 6.99 cm; and
A draft tube 40 having a length (i.e., height, a longitudinal axis of draft tube 40 being vertically oriented) of 5.72 cm, inner diameter $D_t$ of 4.32 cm, outside diameter of 4.72 cm, and an outward-protruding rim 45 of about 0.32 cm to 0.64 height and a flare angle relative to wall portion 44 of 45 degrees. A suitable rotation rate for the laboratory scale version of helical impeller 11, especially having a single helical element 50, is from about 30 revolutions per minute (rpm) to about 120 rpm.

In some embodiments the helical impeller further comprises one or more additional helical elements (i.e., a second helical element and, optionally, a third, fourth, etc. helical element according to a number of the additional helical elements), each additional helical element being independently characterizable as described previously and oriented consistent with the first helical element so as to produce a same vertical direction of flow when the helical impeller is being rotated such as in a preferred invention method (e.g., method of separating a first liquid from an emulsion of the second embodiment) employing the coalescer device of the first embodiment comprising the helical impeller.

Fig. 2A and Fig. 2B show an example of a preferred embodiment of the helical impeller. In Figs. 2A and 2B, helical impeller 11 in each figure is identical to each other and Figs. 2A and 2B are used to illustrate different aspects of helical impeller 11. Each helical impeller comprises leading helical element 50, trailing helical element 50A, connecting means 20 (e.g., a weld; indicated only in Fig. 2A), and cylindrical shaft 22 (partially cut away). Helical element 50A is identical to helical element 50, described later and illustrated in Fig. 3. In Figs. 2A and 2B, the helical impeller 11 is disposed in a preferred vertical orientation such that a trailing helical element (50A) is disposed above a leading helical element (50) in such a way so as to form a continuous helical impeller. In Fig. 2B, trailing edge (not indicated) of leading helical element 50 is in operative connection and essentially flush to leading edge 56T of trailing helical element 50A and cylindrical shaft 22 is in operative connection (e.g., via a weld) to trailing edge 58T of trailing helical element 50A. Fig. 2A shows helical impeller 11 with a clockwise direction of rotation, looking down from above, indicated by arrow 23, which clockwise rotation would produce an upward-directed vertical flow. Fig. 2B shows helical impeller 11 with a counterclockwise direction of rotation indicated by arrow 24, which counterclockwise rotation would produce a downward-directed vertical flow. The connecting means 20 is configured in such a way so as to dispose the leading edge of one of the adjacent helical elements within a separation distance ($S_a$) of and at an offset angle ($\alpha_a$) to the trailing edge of the other of the adjacent helical elements so as to independently establish relative spacing and orientation between the adjacent helical elements characterizable by a mathematical relationship between $S_a$ and each of their $L_e$ of $0L_e \leq S_a \leq L_e$ and a value for $\alpha_a$ of from 0° to 10°, respectively. In the preferred embodiments of the helical impeller 11, $S_a = 0L_e$ (i.e., $S_a = 0$. Cylindrical shaft 22 (partially cut away) is an example of a drivable connecting element (described later) and is operatively connected to trailing helical element 50A via a weld (not indicated). Assemble helical impeller 11 by welding together leading and trailing helical elements 50 and 50A, and then weld cylindrical shaft 22 to trailing helical element 50A, thereby assembling helical impeller 11.

Fig. 3 shows helical element 50 (identical to helical element 50A; see Figs. 2A and 2B). As shown in Figs. 2A, 2B, and 3, helical element 50 has a preferred 180 degree angle of twist ($T_e = 180°C$ a diameter $D_e$) and length $L_e$. Helical element 50 has a diameter $D_e$ and length $L_e$, where in $D_e < L_e$. Such helical elements can be obtained or adapted from a commercial source such as, for example, a Kenics® KM series static mixer sold by Chemineer Inc., Dayton, Ohio, USA (Chemineer, Inc. is a subsidiary of Robbins & Myers, Inc.).

Fig. 4 shows an idealized example of a more preferred continuous-separation coalescer device embodiment of the coalescer device of the first embodiment. In Fig. 4, continuous-separation coalescer device 100. The continuous-separation coalescer device 100 is described for convenience here in separation of the aforementioned emulsion wherein the aforementioned first liquid of the emulsion is less dense than the aforementioned second liquid of the emulsion. Preferably the first liquid is an oil, more preferably a crude oil, and the second liquid is water (e.g., fresh water or seawater).

In Fig. 4 continuous-separation coalescer device 100 comprises holding-stir tank 110; mixer 130 (optional; for use in experimental operations); pump 140 (optional; for use in experimental operations); pump 143; pump 145; pump 147; rotameter 150; rotameter 154; valves 157; conduits 159; second liquid collection vessel 160; first liquid collection vessel 164; first container 170; second container 180; and first, second, and third stir motors (all not shown).

In Fig. 4 holding-stir tank 110 comprises a plurality of vertically-oriented baffles 112; outlet drain valve 114; stir shaft 116; three 45-degree-pitched blade turbines (PBT) 117, 118, and 119; and appropriate apertures (not indicated). PBT 117, 118, and 119 are operatively connected to and sequentially spaced apart from each other along stir shaft 116 in such a way that there is a bottom PBT 117, middle PBT 118, and top PBT 119. Bottom PBT 117 is sized to a smaller length than lengths of middle PBT 118 and top PBT 119.

In Fig. 4 mixer 130 has mixing tank 132.

In Fig. 4 both first and second containers 170 and 180 have liquid inlets 173 and 183, respectively; first liquid outlets 175 and 185, respectively; and second liquid outlets 177 and 187, respectively. Draft tubes 172 and 182 are respectively disposed within each of first and second containers 170 and 180. Helical impellers 174 and 184 are respectively disposed within draft tubes 172 and 182 and are each in operative connection to stir shafts 176 and 186, respectively.

Assemble continuous-separation coalescer device 100 shown in Fig. 4 by making operative connections and fluid communications between holding-stir tank 110; mixer 130; pump 140; pump 143; pump 145; pump 147; rotameter 150; rotameter 154; second liquid collection vessel 160; first liquid collection vessel 164; first container 170; second container 180 using conduits 159 and valves 157 as shown in Fig. 4. Place stir shaft 116 of holding-stir tank 110 in operative connection to the first stir motor (not shown), stir shaft 176 in, operative connection to the second stir motor (not shown), and stir shaft 186 in operative connection to the third stir motor (not shown). Connection of first and second containers 170 and 180 in series allows for a continuous separation process.

Operation of continuous-separation coalescer device 100 shown in Fig. 4 can be conveniently illustrated in a method of separating oil from an oil-water emulsion. Use of continuous-separation coalescer device 100 for separating first and second liquids from an emulsion that is not an oil-water emulsion would be readily performed by adapting the procedure described here where the first liquid is less dense than the second liquid. Operate continuous-separation coalescer device 100 in an oil recovery operation in a preferred embodiment of the method of separating a first liquid from an emulsion of the second embodiment. Add an oil-water emulsion (e.g., crude oil-fresh water emulsion or crude oil-seawater emulsion) into holding-stir tank 110. Using pump 143, transfer some of the oil-water emulsion from holding-stir tank 110 via liquid inlet 173 into first container 170 to a level above first liquid outlet 175. Activate the second stir motor so as to rotate helical impeller 174 within draft tube 172 in first container 170 at a rotation rate effective for coalescing a dispersed phase of the oil-water emulsion (e.g., 60 rpm). Allow the oil-water emulsion to partially coalesce for a period of time (e.g., 1 hour) in first container 170, and then with pump 143 begin introducing a feed stream of the oil-water emulsion from holding-stir tank 110 via liquid inlet 173 into first container 170 at a suitable flow rate (e.g., 70 milliliters per minute (mL/min). Promptly using pump 145 start feeding a top partially-coalesced oil layer from first container 170 sequentially via first liquid outlet 175 and liquid inlet 183 into second container 180. Set outlet flow power of pump 145 at a suitable flow rate (e.g., up to 64 mL/min) so as to achieve a steady state condition in first container 170. Open valve 179 at the bottom of first container 170 to drain a water phase from bottom of first container 170 into second liquid collection vessel 160 and maintain outlet water-phase flow rate to keep fluid level in the first container 170 constant (e.g., about 49 mL per minute). Activate the third stir motor (not shown) so as to rotate helical impeller 184 within draft tube 182 in second container 180 at a rotation rate effective for coalescing remaining dispersed phase of the partially-coalesced oil layer (e.g., 60 rpm). When height of an oil-rich phase reaches first liquid outlet 185 of second container 180, use pump 147 to transfer a top purified oil via first liquid outlet 185 to first liquid collection vessel 164 at a flow rate suitable for maintaining a steady state condition in second container 180 (e.g., a maximum yield flow rate of 36 mL/min). At the same time that the purified oil is being drawn from first liquid outlet 185 of second container 180, draw off a water-rich phase from second liquid outlet 187 of second container 180 by opening valve 189 to give a flow rate of water-rich phase of so as to maintain a constant liquid level in second container 180 (e.g., about 0.2 mL/min). Collect the water-rich phase in second liquid collection vessel 160 or send it to a drain (as indicated by arrow 199).

Operate continuous-separation coalescer device 100 shown in Fig. 4 in an experimental operation in a preferred embodiment of the method of separating a first liquid from an emulsion of the second embodiment. Prepare a test oil-water emulsion by adding an oil, water, and 0, 1, or more additives into holding-stir tank 110. Drain resulting ingredients via valve 114 of holding-stir tank 110 into mixing chamber 132 of mixer 130. Activate mixer 130, then using pump 140 transfer the resulting test oil-water emulsion from mixing chamber 132 of mixer 130 back into holding-stir tank 110. Activate first stir motor (not shown) so as to rotate shaft 116 and PBTs 117-119 in holding-stir tank 110 to maintain the test oil-water emulsion. Mix the ingredients for a period of time (e.g., 1.5 hours) to give the test oil-water emulsion. Continue the experimental operation in a manner similar to the method of separating a first liquid from an emulsion described previously for the production operation.

The impeller employed in the invention methods comprises the helical impeller (e.g., 11). As mentioned previously, the helical impeller comprises one or more helical elements (e.g., 50), the helical elements being disposed within the draft tube (e.g., 40). Where the helical impeller (e.g., 11) comprises two or more helical elements (e.g., 50 and 50A), the helical impeller comprises a leading helical element (e.g., 50); a trailing helical element (e.g., 50A); and a number N intermediate helical elements (not shown), where N is an integer of 0 or greater; and a number X means for connecting (connecting means), where X equals 1 plus N (X = 1 + N); the helical elements having a same direction of twist (i.e., handedness); the helical impeller being configured in such a way that the leading, intermediate, and trailing helical elements are axially aligned with and in sequential operative connection to each other, each operative connection between adjacent helical elements independently comprising one of the connecting means. More preferred is an essentially monolithic-form helical impeller.

The draft tube (e.g., 40) employed in the invention methods and in preferred embodiments of the coalescer device of the first embodiment is open-ended and comprises a cylindrical wall (e.g., 44), the wall having spaced-apart top and bottom end portions (not indicated), each top and bottom end portion independently defining spaced-apart and opposing top and bottom apertures (e.g., 42 and 48), respectively, the cylindrical wall defining an enclosed volumetric space (e.g., 46) within the draft tube, the draft tube having a longitudinal axis between the top and bottom apertures; fluid flow causing portions (e.g., helical elements 50 and 50A) of the impeller (e.g., 11) being disposed within the enclosed volumetric space of the draft tube. Preferably the top end portion of the draft tube is flared, that is the top end portion of the draft tube defines an outwardly-protruding rim or lip (e.g., 45). Preferably the flare is at an angle of from 0 degrees to 90 degrees, and more preferably from greater than 0 degrees to less than 90 degrees (e.g., about 45 degrees), relative to the cylindrical wall of the draft tube. In some embodiments the container (e.g., 30) defines a downward taper above the draft tube (e.g., 40) (container is wider at its top than at a point just above the draft tube). In some embodiments there are two or more vertically-oriented baffles disposed within draft tube.

Preferably the coalescer device (e.g., 70) further comprises a draft tube holder (not shown) disposed for holding the draft tube (e.g., 40). Examples of suitable draft tube holders (not shown) are finger protrusions (not shown) from wall 34 of container 30 and a wire hanger (not shown), which can be suspended from a top portion (not indicated) of container 30 near upper portion 38 or from a support structure (not shown) that is separate from the coalescer device (e.g., 70).

In some embodiments the draft tube (e.g., 40) further comprises electrodes (not shown), a means for heating the draft tube (not shown), or both. The electrodes and means for heating the draft tube each independently are effective for increasing rate of coalescing of the aforementioned first liquid from the emulsion useful in the method of separating a first liquid from an emulsion of the second embodiment compared to a draft tube lacking them.

The rotating means (not shown) is operable at least for rotating the impeller (e.g., 11). Preferably the rotating means comprises a drivable connecting element (e.g., shaft 22) and motor for rotating the drivable connecting element (not shown), the impeller being in sequential operative connection to the drivable connecting element and motor. In some embodiments, the drivable connecting element (e.g., shaft 22) is in operative connection to the trailing edge (e.g., 58T in Fig. 2B) of the trailing one of the helical elements (e.g., 50A in Fig. 2B), Preferably the drivable connecting element comprises a shaft (e.g., 22) and is capable of operatively connecting to the motor (e.g., not shown), the rotating means being capable of rotating the impeller (e.g., 11) around its longitudinal axis (not indicated) in the invention methods. Preferably, the motor is a stirrer motor (e.g., electricity powered or compressed-air driven stirrer motor).

The invention contemplates employing containers (e.g., 30) for holding the emulsion useful in the method of the second embodiment or the mixture in the method of the third embodiment. Any container (e.g., a container) suitable for the present purposes can be used, although especially in invention methods where the longitudinal axis (not indicated) of the impeller (e.g., 11) is essentially not moved relative to the longitudinal axis (not indicated) of the container, preferably the wall (e.g., 34) of the container (e.g., 30) is cylindrical and of substantially constant inner diameter along its longitudinal axis (not indicated). Examples of preferred containers are oil pipeline, oil storage tanks, oil transportation tanks (e.g., adapted for being carried by truck, rail or ship), separation vessels, and reactor vessels. In some embodiments, the coalescer device (e.g., 70) further comprises a container holder (not shown) disposed for holding the container (e.g., 30).

In some embodiments, the enclosed volumetric space (e.g., 36) of the container (e.g., 30) is in fluid communication with an exterior (not indicated) to the container (e.g., 30) via an aperture defined by the top portion (e.g., 38) of the container (e.g., 30), an aperture defined by the bottom portion (e.g., 32) of the container (e.g., 30), or both. Preferably the bottom portion (e.g., 32) of the container (e.g., 30) is sealed except for 0, 1 or more relatively narrow (compared to diameter of container) liquid outlets. In some embodiments (especially those employing an aforementioned horizontal orientation or inverse vertical orientation of the impeller), the coalescer device (e.g., 70) further comprises a sealing means (not shown), the sealing means being in sealing operative contact with a portion (not indicated) of the container (30) proximal to the aperture thereof and in low-friction (i.e., allowing rotation) sealing contact with the drivable connecting element (e.g., shaft 22) of the impeller (e.g., 11) so as to seal the container against leakage of the emulsion contained therein. Examples of the sealing means are a stirrer bearing, hatch cover, and a combination thereof.

The impeller (e.g., 11) and other components (e.g., draft tube (e.g., 40) and container (e.g., 30)) of the coalescer device (e.g., 70) of the present invention can be constructed from one or more materials known for use in the art. Examples of the materials are metals (e.g., titanium), metal alloys (e.g., steel, stainless steel, and HASTELLOY® (Haynes International, Inc.) alloys), glass (e.g., a borosilicate glass), ceramic, plastic (e.g., polypropylene and polytetrafluoroethylene), reinforced plastic (e.g., fiberglass reinforced plastic), and combinations thereof. Preferred construction materials for impellers (e.g., 11) are metals and metal alloys such as, for example, number 316 stainless steel and an organic polymer such as, for example, a poly(acrylic acid) or polytetrafluoroethylene. Preferred construction materials for draft tubes (e.g., 40) and containers (e.g., 30) independently are glass (e.g., silicate glass, preferably borosilicate glass), metals and metal alloys such as, for example, number 316 stainless steel and an organic polymer such as, for example, a poly(acrylic acid) or polytetrafluoroethylene.

The invention coalescer device is capable of separating a first liquid from an emulsion, the emulsion comprising the first liquid in a dispersed phase and a second liquid in a continuous phase, the first and second liquids being substantially immiscible in each other, the separation being characterizable by a first liquid separation efficiency $\eta_{eff}^1$ of 75% or greater. Preferably the first liquid separation efficiency $\eta_{eff}^1$ is 80% or greater, more preferably 85% or greater, still more preferably 95% or greater, and even more preferably 98% or greater, wherein the first liquid separation efficiency $\eta_{eff}^1$ is determined in a manner similar to determination of oil separation efficiency $\eta_{eff}$ as described later (that is, parameters for the first liquid would replace parameters for the oil and parameters for the second liquid would replace parameters for water).

Preferably the first liquid is an oil, and the first liquid separation efficiency $\eta_{eff}^1$ is the oil separation efficiency $\eta_{eff}$. The oil separation efficiency $\eta_{eff}$ of the invention method of separating a first liquid from an emulsion employing a preferred oil-water coalescer device embodiment of the coalescer device of the first embodiment is 75% or greater, preferably 80% or greater, more preferably 85% or greater, still more preferably 95% or greater, and even more preferably 98% or greater, wherein oil separation efficiency $\eta_{eff}$ is determined as described later.

The coalescer device and separation method of separating a first liquid from an emulsion of the present invention advantageously provide at least a 25% greater separation efficiency (e.g., oil separation efficiency, $\eta_{eff}$) for a given ratio of emulsion unit surface area to emulsion unit volume than separation efficiencies provided by simple gravity-assisted separation columns. As used here the term "emulsion surface area" means cross-sectional area of the container holding the emulsion. The term "emulsion unit volume" means total volume of the emulsion when the invention separation method begins.

The invention coalescer device can be employed in the invention method of separating solid particles from a liquid comprising an emulsion, the emulsion comprising a first liquid in a dispersed phase and a second liquid in a continuous phase, the first and second liquids being substantially immiscible in each other; the emulsion having an initial content of the second liquid and being in need of separation; the draft tube being oriented essentially vertically in the emulsion. In some embodiments, the method further comprises the activated vertical flow causing means causing a vertically-directed flow of the emulsion through the draft tube, and thereby coalescing together of at least some of the first liquid from the emulsion so as to form a coalesced first liquid layer having a reduced content of the second liquid, the reduced content of the second liquid of the coalesced first liquid layer being lower than the initial content of the second liquid of the emulsion, wherein the first liquid layer and the concentrated solid particles layer are the same. In some embodiments, the method further comprises the activated vertical flow causing means causing a vertically-directed flow of the emulsion through the draft tube, and thereby coalescing together of at least some of the first liquid from the emulsion so as to form a coalesced first liquid layer having a reduced content of the second liquid, the reduced content of the second liquid of the coalesced first liquid layer being lower than the initial content of the second liquid of the emulsion, wherein the first liquid layer and the concentrated liquid layer are the same. In some embodiments the solid particles comprise oil sands fines (e.g., sand, clay, and the like). In some embodiments, the invention coalescer device can be employed in the invention method of separating solid particles from a liquid comprising an emulsion so as to separate bitumen from oil sands. Upon such separation the oil sands fine tailings can remain in the dispersed phase or in the continuous phase or separate as a sediment.

Sizes of solid particles that can be separated by the invention coalescer device in the invention method of the third embodiment typically are from 1 micron to 1000 microns. Particle size can be measured as described later.

The solid particles and liquid in the mixture that is separated each independently can be characterized by its specific gravity. The rate of separation of the solid particles from the mixture is a function of a difference between the specific gravity of the solid particles and the specific gravity of the liquid, wherein the greater the difference the higher the rate of separation.

The emulsion separated in the methods described herein can be the same or different.

The emulsion separated in the methods described herein independently can further comprise a chemical additive, which in some embodiments of the invention methods is added to the emulsion or mixture so as to enhance the separations. Examples of chemical additives useful in the invention methods are surfactants, dispersants, and flocculants. Examples of useful surfactants are DOWFAX® 2A1 and METHOCEL® K-4M, both from The Dow Chemical Company, Midland, Michigan, USA. Examples of useful dispersants are polyethylene glycol (CARBOWAX™, Dow Chemical Company, Midland, MI, USA). Examples of useful flocculants are Polyox® and UCARFLOC ® both from The Dow Chemical Company, Midland, Michigan, USA. The surfactants are especially useful for improving the invention separation method by helping keep the oil and water phases apart. The dispersants are especially useful for improving the invention when there are more than two phases present and the dispersant can be used to separate any two phases, which might otherwise not separate easily. The flocculants are especially useful for improving the invention separation method t in separating solid particles from a liquid emulsion.

The methods described herein may comprise a reaction mixture hosting a chemical reaction, wherein the chemical reaction produces a phase change (e.g., oiling out of a liquid or precipitation of solid particles, respectively) so as to form the emulsion or mixture being separated in the second or third embodiment, respectively.

In some embodiments the invention methods further comprise sparging a gas (e.g., air, nitrogen gas, or carbon dioxide gas) through the emulsion of mixture being separated, thereby enhancing rate of separation thereof.

A discontinuous liquid phase in the emulsion being separated in the invention separation method of separating a liquid from an emulsion can be characterized by droplet size of the liquid, of the discontinuous liquid phase. In some embodiments the droplet size is from 1 micron to 1000 microns. Droplet size can be measured as described later.

The invention coalescer device can be employed and invention separation method can be performed at any temperature suitable for separating the first liquid from the emulsion. Preferably the temperature is from a temperature above a highest freezing point of any one of the liquids of the emulsion to a temperature below a lowest boiling point of any one of the liquids of the emulsion. For example, for oil/water separations the temperature is from about 0 °C (i.e., about the freezing point of water at standard atmospheric pressure (101 kilopascals (kPa)), or a little lower depending on extent of freezing point depression due to other ingredients of the emulsion) to about 100 °C (i.e., about the boiling point of water at atmospheric pressure, or a little higher depending on extent of boiling point elevation due to other ingredients of the emulsion), preferably from greater than 0 °C to less than 100 0 °C, more preferably less than 60 °C, still more preferably less than 40 °C, and even more preferably 30 °C less than.

The invention coalescer device can be employed and invention separation method can be performed at any pressure suitable for separating the first liquid from the emulsion. Preferably the pressure is from 5 pounds per square inch (psi, i.e., 1 kPa) to 300 psi (i.e., 2070 kPa).

MATERIALS AND GENERAL METHODS.

Materials:

The invention method and device can be demonstrated with a laboratory scale experiment and an oil-water emulsion. Other scales of equipment and emulsions other than oil-water emulsions are contemplated by the present invention and are expected to perform as described below and in the Examples. Oils suitable for forming the oil-water emulsions and being separated therefrom by coalescence for the experiment include SUNPAR 150® Naphthenic Oil (naphthenic oil; trademark owner Sun Oil Company, Philadelphia, Pennsylvania, USA; supplier R.E. Carroll, Trenton, New Jersey, USA), CORSOL™ 500 Paraffin Oil (paraffin oil; trademark owner PRP Industries, Inc., Muskegon, Michigan, USA; supplier R.E. Carroll), and MOBILGEAR 629® oil (Mobil Oil Corp., Fairfax, Virginia, USA). Oil additives suitable for use as additional ingredients in the experiment include DOWFAX® 2A1 and METHOCEL® K-4M, both from The Dow Chemical Company, Midland, Michigan, USA. DOWFAX® 2A1 is a mixture of 46 wt% sodium benzeneoxybispropylene sulfonate (Chemical Abstracts Service (CAS) Registry Number (RegNo.) 119345-04-9), 1 wt% sulfuric acid disodium salt (CAS RegNo. 7757-82-6), and water (52 wt%). METHOCEL® K-4M is used as a solution of 1 wt% hypromellose 2280 (CAS RegNo. 9004-65-3) in water (99 wt%). Hypromellose is short for hydroxypropyl methylcellulose (HPMC). Surfactants suitable for use as additional ingredients in the experiment include TERGITOL™ 15-S (Union Carbide Corp., Midland, Michigan, USA) series surfactants, ECOSURF™ EH series surfactants, and TERGITOL™ NP-9 surfactant, as well as other surfactants and stabilizers from The Dow Chemical Company. A preferred TERGITOL™ 15-S is TERGITOL™ 15-S-9. TERGITOL™ 15-S-9 is a mixture of greater than 97 wt% secondary alcohol ethoxylate (CAS RegNo. 84133-50-6), less than 3 wt% polyethylene glycol (CAS RegNo. 25322-68-3), and less than 2 wt% $(C_{12}$-$C_{14})$secondary alcohols (CAS RegNo. 126950-60-5). A preferred ECOSURF™ EH is ECOSURF™ EH-9. ECOSURF™ EH-9 is greater than 99 wt% 2-ethyl-hexanol EO-PO nonionic (CAS RegNo. 64366-70-7). TERGITOL™ NP-9 is a mixture of greater than 97 wt% branched alpha-(4-nonylphenyl)-omega-hydroxy-poly(oxy-1,2-ethanediyl) (CAS RegNo. 127087-87-0); less than 3 wt% polyethylene glycol (CAS RegNo. 25322-68-2); and less than 2 wt% dinonylphenyl polyoxymethylene (CAS RegNo. 9014-93-1). Water suitable for forming the oil-water emulsions for the experiment includes fresh tap water, seawater, and deionized water.

Compositions of Polyox™ WSR-303 and UCARFLOC 309TM are greater than 95% poly(ethylene) oxide (CAS RegNo. 25322-68-3), less than 3% fumed silica (CAS RegNo. 112945-52-5), and less than or equal to 1% calcium.

Provide four identical containers, each container having a height of 254 cm, an inner diameter of 6.35 cm, and outside diameter of 6.99 cm.

Split Ratio:

For an operating coalescer device having a first rate of an emulsion fluid entering the device, the first rate being called the "inlet flow rate;" and a second rate of treated fluid exiting the device via a top liquid outlet, the second rate being called the "overflow rate." The term "split ratio" (F) means a ratio of the overflow rate to the inlet flow rate as given in equation (1):

$$F = \frac{\dot{Q}_{overflow}}{\dot{Q}_{inlet}} \cdot 100\% \tag{1}$$

wherein F is the split ratio; $\dot{Q}_{overflow}$ is the overflow rate; and $\dot{Q}_{inlet}$ is the inlet flow rate.

Oil Separation Efficiency:

For an operating oil-water coalescer device having a third rate of an oil portion of an oil-water emulsion fluid entering the device, the third rate being called the "oil inlet flow rate" and a fourth rate of an oil portion of the treated fluid exiting the device via a top liquid outlet, the fourth rate being called the "oil overflow rate," the term "oil separation efficiency" ($\eta_{eff}$) means a ratio of the oil overflow rate to the oil inlet flow rate as given in equation (2):

$$\eta_{eff} = \frac{\dot{Q}_{oil-overflow}}{\dot{Q}_{oil-inlet}} \cdot 100\% \tag{2}$$

wherein $\eta_{eff}$ is the oil separation efficiency; $\dot{Q}_{oil-overflow}$ is the oil overflow rate; and $\dot{Q}_{oil-inlet}$ is the oil inlet flow rate.

A first concentration of oil in the oil-water emulsion fluid entering the oil-water coalescer device, the first concentration being called the "oil inlet concentration;" a second concentration of oil in the treated fluid exiting the oil-water coalescer device via a bottom liquid outlet, the second concentration being called the "oil underflow concentration;" and a fifth rate of another oil portion of the treated fluid exiting the oil-water coalescer device via the bottom liquid outlet, the fifth rate being called the "oil underflow rate," can be used to modify equation (2) utilizing continuity relationships for oil flow shown in equation (3) or (4):

$$\dot{Q}_{oil-inlet} = \dot{Q}_{oil-overflow} + \dot{Q}_{oil-underflow} \tag{3}$$

or

$$\dot{Q}_{inlet} \, x \, C_{oil-inlet} = \dot{Q}_{overflow} \, x \, C_{oil-overflow} + \dot{Q}_{underflow} \, x \, C_{oil-underflow} \qquad (4)$$

wherein $C_{oil-inlet}$ is the oil inlet concentration; $C_{oil-underflow}$ is the oil underflow concentration; $\dot{Q}_{oil-underflow}$, is the oil underflow rate; and $\dot{Q}_{oil-overflow}$ and $\dot{Q}_{oil-inlet}$ are as defined for equation (2). Utilizing the continuity relationships for oil flow, oil separation efficiency $\eta_{eff}$ of equation (2) then becomes as shown in equation (5):

$$\eta_{eff} = \frac{\dot{Q}_{oil-inlet} - \dot{Q}_{oil-underflow}}{\dot{Q}_{oil-inlet}} \cdot 100\%$$

$$\eta_{eff} = \left[ 1 - \frac{\dot{Q}_{oil-underflow}}{\dot{Q}_{oil-inlet}} \right] \cdot 100\%$$

$$\eta_{eff} = \left( 1 - \frac{\dot{Q}_{underflow} \cdot C_{oil-underflow}}{\dot{Q}_{inlet} \cdot C_{oil-inlet}} \right) \cdot 100\% \qquad (5).$$

Note that when $C_{oil-underflow}$ approaches zero, the oil separation efficiency approaches maximum oil separation efficiency.

Particle size measurement method: ASTM E2651-08 (Standard Guide for Powder Particle Size Analysis).

Droplet size measurement method: ASTM E799-03 (Standard Practice for Determining Data Criteria and Processing for Liquid Drop Size Analysis).

PREPARATIONS.

Preparations 1a and 1b: homogeneous oil-water emulsion 1

Prepare two equal batches 1a and 1b of a homogeneous oil-water emulsion as follows. For each batch mix together deionized water (566 grams (g)) and 0.15 g of 48 wt% active DOWFAX™ 2A1 additive in a 1 liter (L) beaker using an OMNI Mixer ES rotating at 6000 rpm for 5 minutes. Add to the resulting mixture 250 g of Sunpar 150® naphthenic oil, and mix for an additional 10 minutes, forming a homogeneous oil-water emulsion 1 therewith. The oil-water emulsion has average oil droplet size of about 150 microns ($\mu$m) as measured with a Coulter particle size analyzer. Use immediately as described later in Comparative Example 1 and Example 1.

Preparations 2a and 2b: homogeneous oil-water emulsion 2

Prepare two equal batches 2a and 2b of a homogeneous oil-water emulsion as follows. For each batch mix together 500 g of deionized water and 70 g of 1. wt% METHOCEL K-4M in water in a 1 L beaker using the OMNI Mixer ES at 6000 rpm for 5 minutes. To the resulting mixture add 250 g of Mobilgear 629® oil, and stir for an additional 10 minutes, forming a homogeneous oil-water emulsion 2 therewith. The oil-water emulsion has average oil droplet size of about 150 microns ($\mu$m) as measured with a Coulter particle size analyzer. Use immediately as described later in Comparative Example 2 and Example 2.

Preparation 3

Provide at least the gear pump; mixer; stir motor; and holding-stir tank portions of the laboratory scale version of the continuous-separation coalescer device 100 of Fig. 4. In Preparation 3 the gear pump is a MICROPUMP™ (Micropump Corp., Concord, California, USA) gear pump (Part Number 81373; not shown). In Preparation 3 the mixer is a SILVERSON™ (Silverson Machines Ltd., Waterside, Chesham Bucks, England) L4RT mixer equipped with an emulser screen and a mixing chamber having and appropriate apertures (not indicated). In Preparation 3 the stir motor is a three quarter horse power LEESON™ (Leeson Electric Corp., Grafton, Wisconsin, USA) motor operable up to 1760 rpm. In Preparation 3 the holding-stir tank has a 12 inch (30 centimeters (cm)) diameter and 23 inch (58 cm) height and is of a cylindrical shape and made of glass. The holding-stir tank is equipped with 4 vertically-oriented baffles; an outlet drain valve; a stir shaft and three 45-degree-pitched blade turbines (PBT) operatively connected thereto; and appropriate apertures (not indicated). The PBT are vertically sequentially spaced 6 inches apart from each other along the stir shaft in such a way that there is a bottom, middle, and top impeller. Rotation of the bottom PBT defines a circle 4 inches (10 cm) in diameter and rotation of the middle and top PBT define circles that are each 5.5 inches (14 cm) in diameter. The stir shaft and PBT are powered by the Leeson motor.

Prepare an oil-water emulsion comprising components 36.1 pounds (16.4 kilograms (kg)) of water, 15.48 pounds (7.02 kg) of 1 wt% METHOCEL K-4M in water, and 5.02 pounds (2.78 kg) of MOBILGEAR™ 629 oil as follows. Add the water, 1 wt% METHOCEL K-4M in water, and MOBILGEAR™ 629 oil to the holding-stir tank. Transfer the resulting components through the outlet drain valve of the holding-stir tank to the mixing chamber .of the SILVERSON™ L4RT mixer and set rotation speed of the mixer to 6000 rpm for 1.5 hours to give the oil-water emulsion. Pass the resulting oil-water emulsion to the holding-stir tank via the MICROPUMP™ gear pump. Activate the LEESON™ stir motor so as to rotate stir shaft and PBTs of holding-stir tank (e.g., 60 rpm) and maintain oil-water emulsion until it is ready to be used in a separation experiment.

Comparative Example(s).

Comparative Example(s) are provided herein as a contrast to certain embodiments of the present invention and are not meant to be construed as being either prior art or representative of non-invention examples.

Comparative Example 1: gravity only based separation of oil from homogeneous oil-water emulsion 1

In one of the four identical containers, do not add coalescer device equipment. Immediately after preparation add one of the two batches of the homogeneous oil-water emulsion 1 to the container. Periodically at time, t, measure height of a forming coalesced oil layer and calculate volume/volume percent recovery (v/v %) of the oil used. Measure at time, t , height of the coalesced oil layer from top of liquid in the container to bottom of the coalesced oil layer. Calculate at time, t, the v/v% by dividing volume of the coalesced oil layer by volume of SUNPAR™ 150 naphthenic oil used in homogeneous oil-water emulsion 1. Results are tabulated later in Table 1.

Comparative Example 2: gravity only based separation of oil from homogeneous oil-water emulsion 2

In another one of the four identical containers, do not add coalescer device equipment. Immediately after preparation add one of the two batches of the homogeneous oil-water emulsion 2 to the container. Observe qualitatively similar results as those for Comparative Example 1.

Non-limiting examples of the present invention are described below. In some embodiments, the present invention is as described in any one of the Examples. Preferred embodiments of the present invention incorporate one limitation, and more preferably any two, limitations of the Examples, which limitations thereby serve as a basis for amending claims.

Example(s) of the Present Invention.

Example 1: invention separation of oil from homogeneous oil-water emulsion 1

In another one of the four containers, dispose helical element 50 inside draft tube 40, both of Fig. 1. Draft tube 40 has a length (i.e., height, a longitudinal axis of draft tube 40 being vertically oriented) of 5.72 cm, inner diameter $D_t$ of 4.32 cm, outside diameter of 4.72 cm, and an outward-protruding rim 45 of about 0.32 cm to 0.64 cm in rim height and a flare angle relative to wall portion 44 of 45 degrees. Helical element 50 has a length $L_e$ (i.e., height, the longitudinal axis of helical element 50 being vertically oriented) of 3.81 centimeters (cm) and diameter $D_e$ of 2.54 cm and is in operative connection to shaft 22 as shown in Fig. 1 .Connect shaft 22 to a Servodyne Mixer. Immediately after preparation add one of the two batches of the homogeneous oil-water emulsion 1 to the container. Activate the Servodyne Mixer so as to rotate helical element 50 and shaft 22 at a rotation rate of 60 rpm. Periodically at time, t, measure height of a forming coalesced oil layer and calculate volume/volume percent recovery

(v/v %) of the oil used. Measure at time, t, height of the coalesced oil layer from top of liquid in the container to bottom of the coalesced oil layer. Calculate at time, t, the v/v% by dividing volume of the coalesced oil layer by volume of SUNPAR™ 150 naphthenic oil used in homogeneous oil-water emulsion 1. Results are tabulated below in Table 1.

Table 1: oil separation rates of homogeneous oil-water emulsion 1

| Time, t (minutes) | Comparative Example 1 Oil Height (cm) | Example 1 Oil Height (cm) | Comparative Example 1 Oil Recovery volume (v/v %) | Example 1 Oil Recovery volume (v/v %) |
|---|---|---|---|---|
| 0 | 0 | 0 | 0 | 0 |

(continued)

| Time, t (minutes) | Comparative Example 1 Oil Height (cm) | Example 1 Oil Height (cm) | Comparative Example 1 Oil Recovery volume (v/v %) | Example 1 Oil Recovery volume (v/v %) |
|---|---|---|---|---|
| 5 | 0.94 | 3.66 | 11.7 | 44.8 |
| 10 | 1.6 | 5.46 | 19.6 | 66.8 |
| 15 | 2.18 | 6.1 | 27.1 | 74.6 |
| 20 | 2.95 | 6.71 | 36.6 | 82.1 |
| 25 | 3.94 | 7.04 | 48.9 | 86.1 |
| 30 | 5.11 | 7.44 | 63.4 | 91.1 |
| 35 | 5.94 | 7.67 | 73.9 | 93.9 |
| 40 | 6.40 | 7.75 | 79.5 | 94.8 |

The resulting improved coalescing rate in Example 1 is 289% more oil recovered at t = 5 minutes; 247% more oil recovered at t = 10 minutes; 179% more oil recovered at t 15 minutes; 128% more oil recovered at t = 20 minutes; 79% more oil recovered at t = 25 minutes; 46% more oil recovered at t = 30 minutes; 29% more oil recovered at t = 35 minutes; and 21% more oil recovered at t = 40 minutes compared to amount of oil recovered at same times using the corresponding gravity only-based coalescing rates at same times t in Comparative Example 1, where each rate is determined with a same oil-water emulsion and by measuring respective times for producing the coalesced oil layer of a same height.

Example 2: invention separation of oil from homogeneous oil-water emulsion 2

In another one of the four containers, dispose helical element 50 inside draft tube 40, both of Fig. 1. Draft tube 40 has a length (i.e., height, a longitudinal axis of draft tube 40 being vertically oriented) of 5.72 cm, inner diameter $D_t$ of 4.32 cm, outside diameter of 4.72 cm, and an outward-protruding rim 45 of about 0.32 cm to 0.64 cm rim height and a flare angle relative to wall portion 44 of 45 degrees. Helical element 50 has a length $L_e$ (i.e., height, the longitudinal axis of helical element 50 being vertically oriented) of 3.81 centimeters (cm) and diameter $D_e$ of 2.54 cm and is in operative connection to shaft 22 as shown in Fig. 1. Connect shaft 22 to a Servodyne Mixer. Immediately after preparation add one of the two batches of the homogeneous oil-water emulsion 2 to the container. Activate the Servodyne Mixer so as to rotate helical element 50 and shaft 22 at a rotation rate of 60 rpm. Observe qualitatively similar results as those for Example 1.

Example 3: separation of oil from an oil-water emulsion

Use the aforementioned laboratory scale version of the continuous-separation coalescer device 100 of Fig. 4 as partially described in Preparation 3. In Example 3 both Container 1 (e.g., first container 170) and Container 2 (e.g., second container 180) have a length (i.e., height) of 32 inches (81 cm), an inside diameter of 4 inches (10 cm), and a wall thickness of one quarter inch (0.64 cm). Container 1 has a liquid inlet port 19.5 inches (49.5 cm) from the top of Container 1. Container 2 has a liquid inlet placed at 20.5 inches (52.1 cm) from the top of Container 2. Both Containers 1 and 2 also have two liquid outlets: a first liquid outlet at 5 inches (13 cm) from the tops of Containers 1 and 2 and a second liquid outlet at bottoms of Containers 1 and 2.

In Example 3 draft tube is disposed within each of Containers 1 and 2. A helical impeller having three helical elements (e.g., 50, 50A, and another 50A) with a 1.5 inch (3.8 cm) diameter and length of 6.75 inches (17.1 cm) is disposed within each draft tube and is in operative connection to a stir shaft (e.g., 22). Each draft tube has a length (i.e., height) of 8 inches (20 cm), inner diameter $D_t$ of 2 inches (5 cm), outside diameter of 2.25 inches (5.72 cm), and an outward-protruding rim (not shown) of 45 degrees and 0.25 inch (0.64 cm) in height. Each stir shaft is connected to a different Servodyne Mixer (Model 50000-30 and controller Model 50003-00; not shown).

Immediately after preparation of the oil-water emulsion as described in Preparation 3, add the oil-water emulsion into Container 1 to fill Container 1 to a level above the first liquid outlet thereof and below top of Container 1. Activate the Servodyne Mixer (not shown) for Container 1 so as to rotate helical impeller in Container 1 at a rotation rate of 60 rpm. Allow the oil-water emulsion to separate for 1 hour, and then begin introducing oil-water feed via liquid inlet port of Container 1 into Container 1 at a flow rate of 70 mL/min using a MASTERFLEX™ (Cole-Farmer Instrument Company, Vernon Hills, Illinois, USA) L/S Drive Model 7550-20 and diaphragm pump head Model 7090-42 (not shown). Also, start feeding a formed top oil layer from Container 1 via liquid inlet port of Container 2 into Container 2 by starting a first FMI pump Model QVG50 with a one-half inch (1.3 cm) ceramic piston (not shown). The pump head of the first FMI pump is placed at an angle setting of 10 allowing for a flow rate of up to 64 mL per minute from the first liquid outlet of Container 1. Set outlet flow of first FMI™ (Fluid Metering Inc., Syosset, New York, USA) pump at 335 power out of 999. Open the needle valve at the bottom of Container 1 and maintain water-phase outflow rate of about 49 mL per minute through a first rotameter in order to keep liquid level constant in Container 1. Drain water phase into a plastic water collection vessel.

Activate the Servodyne Mixer (not shown) for Container 2 so as to rotate helical impeller in Container 2 at a rotation rate of 60 rpm. When height of an oil-rich phase reaches the first liquid outlet of Container 2, open the ball valve'(not shown) to a second FMI™ pump (Model QVG50) (not shown). This second FMI™ QVG50 pump is equipped with a three-eighths inch (0.95 cm) stainless steel piston housed in a stainless steel body (not shown). The position of the pump head of the second FMI™ pump is placed at a setting of 10 allowing for the maximum yield flow rate of 36 mL per minute. Set the second FMI™ pump power to 205 out of 999 and collect purified oil in a glass first liquid collection vessel. At the same time that the purified oil is being drawn from the first liquid outlet of Container 2, draw off a water-rich phase from the second liquid outlet of Container 2 by opening the needle valve at the bottom of Container 2 to give a flow rate of water-rich phase of approximately 0.2 mL per minute through a second rotameter so as to maintain a constant liquid level in Container 2. Collect the water-rich phase in the plastic second liquid collection vessel or send the water-rich phase to a drain (e.g., as indicated by arrow 199). The oil separation efficiency $\eta_{eff}$ of this experiment is 98.4%.

As shown by the Examples, the method and coalescer device described herein are independently useful for separating oil from an oil-water emulsion where the water and oil originate in an oil-water emulsion. The invention method and coalescer device lack high pressure and aeration and is capable of coalescing oil from an oil-water emulsion relatively rapidly and efficiently. The coalescer device employed in the method and the coalescer device each is of simple construction, mechanically easy to operate, and is adaptable for use in land-based and offshore oil deposit operations. In some embodiments the invention is characterizable by a counterintuitive discovery by the inventors that rotating the impeller so as to produce the upward flow (as opposed to downward flow) of the oil-water emulsion does not cause further mixing of the oil-water emulsion but instead is effective for improving rate of coalescing the oil from the oil-water emulsion. The rotating is in a direction to produce the upward flow. The rotating is also at an effective low rotation rate that is substantially lower than a rotation rate necessary for mixing oil and water together to give an emulsion thereof. At the time, t, the resulting improved coalescing rate is at least 20 percent more first liquid after 40 minutes (and over 100 percent more first liquid after just 20 minutes) than a gravity only-based coalescing rate, where each rate is determined with a same oil-water emulsion and by measuring respective times for producing the coalesced oil layer of a same height.

## Claims

1. The use in a method of separating a first liquid from an emulsion of a coalescer device (70) comprising:

   a container (30),
   a draft tube (40), and
   a means for causing a vertical flow of fluid (vertical flow causing means) comprising a helical impeller (11) which is rotatable and comprises a first helical element (50), the first helical element (50) having spaced-apart leading and trailing edges; a longitudinal axis; a length ($L_e$) along its longitudinal axis; an angle of twist ($T_e$) of from 90 degrees (°) to 360° about its longitudinal axis; a diameter ($D_e$) perpendicular to its longitudinal axis; and being dimensioned so as to establish a configuration of the first helical element characterizable by a mathematical relationship between each $L_e$ and $D_e$ of $D_e \leq L_e \leq 2D_e$,

   wherein an emulsion is contained in the container (30), the emulsion comprising a first liquid in a dispersed phase and a second liquid in a continuous phase, the first and second liquids being immiscible in each other; the emulsion having an initial content of the second liquid and being in need of separation; and
   wherein the draft tube (40) is disposed inside the container (30) and is oriented essentially vertically in the emulsion; and the helical impeller (11) is disposed inside the draft tube (40) and operable for causing a vertical flow of fluid therethrough, the coalescer device (70) being operable for coalescing a first liquid from an emulsion when the emulsion is disposed in the container (30) in operative contact with the draft tube (40) and vertical flow causing means; wherein the method comprises:

   rotating the helical impeller (11) disposed within the draft tube (40) at a rotation rate of 30 to 120 revolutions per minute and causing a vertically-directed flow of the emulsion through the draft tube (40);

and thereby coalescing together of at least some of the first liquid from the emulsion so as to form a coalesced first liquid layer having a reduced content of the second liquid, the reduced content of the second liquid of the coalesced first liquid layer being lower than the initial content of the second liquid of the emulsion.

2.  The use as in claim 1, wherein the coalescer device (70) further comprises at least one more container (30), at least one more draft tube (40), at least one more helical impeller (11) according to claim 1, and at least one means for sequentially transferring a liquid from container to container, wherein there is one such draft tube (40) disposed inside each container (30) and one such helical impeller (11) disposed inside each draft tube (40) and operable for causing a vertical flow of fluid therethrough.

3.  The use as in claim 1, wherein the vertical flow causing means further comprises two or more vertically-oriented baffles (112), the helical impeller (11) and two or more vertically-oriented baffles (112) being disposed within and spaced apart from the draft tube (40) in such a way that rotation of the helical impeller (11) about a vertical axis causes a flow of fluid directed vertically by the two or more vertically-oriented baffles (112) through the draft tube (40).

4.  The use as in claim 1, wherein the coalescer device (70) further comprises a rotating means; the rotating means being in operative connection to the helical impeller (11) and operable for causing rotation of the helical impeller (11) within the draft tube (40).

5.  The use as in claim 1, wherein the first liquid is an oil or water.

6.  The use as in claim 5, wherein the emulsion comprises an oil-water emulsion.

7.  The use as in claim 5, wherein the first and second liquids are each other than oil.

8.  The use as in claim 1, wherein the emulsion further comprises a mixture of solid particles.

9.  The use as in claim 1, wherein the helical impeller (11) is rotated at a rate of 60 revolutions per minute.

**Patentansprüche**

1.  Verwendung, in einem Verfahren zum Abscheiden einer ersten Flüssigkeit aus einer Emulsion, einer Koaleszervorrichtung (70), die Folgendes beinhaltet:

    einen Behälter (30),
    ein Saugrohr (40) und
    ein Mittel zum Bewirken eines vertikalen Flusses von Fluid (Vertikalfluss-Bewirkmittel), das ein schraubenförmiges Laufrad (11) beinhaltet, welches drehbar ist und ein erstes schraubenförmiges Element (50) beinhaltet, wobei das erste schraubenförmige Element (50) Folgendes aufweist: eine beabstandete Vorder- und Hinterkante; eine Längsachse; eine Länge ($L_e$) entlang seiner Längsachse; einen Verdrehwinkel ($T_e$) von 90 Grad (°) bis 360° um seine Längsachse; einen Durchmesser ($D_e$) senkrecht zu seiner Längsachse; und bemessen ist, um eine Konfiguration des ersten schraubenförmigen Elements festzulegen, die durch eine mathematische Beziehung zwischen jedem $L_e$ und $D_e$ von $D_e \leq L_e \leq 2D_e$ charakterisierbar ist,

    wobei in dem Behälter (30) eine Emulsion enthalten ist, wobei die Emulsion eine erste Flüssigkeit in einer dispersen Phase und eine zweite Flüssigkeit in einer kontinuierlichen Phase beinhaltet, wobei die erste und zweite Flüssigkeit nicht miteinander mischbar sind; wobei die Emulsion einen Anfangsgehalt an zweiter Flüssigkeit aufweist und Abscheidung benötigt; und
    wobei das Saugrohr (40) innerhalb des Behälters (30) angeordnet ist und im Wesentlichen vertikal in der Emulsion ausgerichtet ist; und das schraubenförmige Laufrad (11) innerhalb des Saugrohrs (40) angeordnet ist und betriebsfähig ist, einen vertikalen Fluss von Fluid dort hindurch zu bewirken, wobei die Koaleszervorrichtung (70) betriebsfähig ist, eine erste Flüssigkeit aus einer Emulsion zu koaleszieren, wenn die Emulsion in betriebsbereitem Kontakt mit dem Saugrohr (40) und dem Vertikalfluss-Bewirkmittel in dem Behälter (30) angeordnet ist;
    wobei das Verfahren Folgendes beinhaltet:

    Drehen des innerhalb des Saugrohrs (40) angeordneten schraubenförmigen Laufrads (11) mit einer Drehgeschwindigkeit von 30 bis 120 Umdrehungen pro Minute und Bewirken eines vertikal gelenkten Flusses der Emulsion durch das Saugrohr (40);

und dadurch Miteinander-Koaleszieren mindestens eines Teils der ersten Flüssigkeit aus der Emulsion, um eine Schicht koaleszierter erster Flüssigkeit mit einem reduzierten Gehalt an zweiter Flüssigkeit zu bilden, wobei der reduzierte Gehalt der Schicht koaleszierter erster Flüssigkeit an zweiter Flüssigkeit niedriger als der Anfangsgehalt der Emulsion an zweiter Flüssigkeit ist.

**2.** Verwendung gemäß Anspruch 1, wobei die Koaleszervorrichtung (70) ferner mindestens einen weiteren Behälter (30), mindestens ein weiteres Saugrohr (40), mindestens ein weiteres schraubenförmiges Laufrad (11) gemäß Anspruch 1 und mindestens ein Mittel zum sequentiellen Transferieren einer Flüssigkeit von Behälter zu Behälter beinhaltet, wobei innerhalb jedes Behälters (30) ein derartiges Saugrohr (40) angeordnet ist und innerhalb jedes Saugrohrs (40) ein derartiges schraubenförmiges Laufrad (11) angeordnet ist und betriebsfähig ist, einen vertikalen Fluss von Fluid dort hindurch zu bewirken.

**3.** Verwendung gemäß Anspruch 1, wobei das Vertikalfluss-Bewirkungsmittel ferner zwei oder mehr vertikal ausgerichtete Ablenkplatten (112) beinhaltet, wobei das schraubenförmige Laufrad (11) und die zwei oder mehr vertikal ausgerichteten Ablenkplatten (112) innerhalb und beabstandet von dem Saugrohr (40) derartig angeordnet sind, dass eine Drehung des schraubenförmigen Laufrads (11) um eine vertikale Achse einen Fluss von Fluid bewirkt, der von den zwei oder mehr vertikal ausgerichteten Ablenkplatten (112) vertikal durch das Saugrohr (40) gelenkt wird.

**4.** Verwendung gemäß Anspruch 1, wobei die Koaleszervorrichtung (70) ferner ein Drehmittel beinhaltet; wobei das Drehmittel in betriebsbereiter Verbindung mit dem schraubenförmigen Laufrad (11) steht und betriebsfähig ist, eine Drehung des schraubenförmigen Laufrads (11) innerhalb des Saugrohrs (40) zu bewirken.

**5.** Verwendung gemäß Anspruch 1, wobei die erste Flüssigkeit ein Öl oder Wasser ist.

**6.** Verwendung gemäß Anspruch 5, wobei die Emulsion eine Öl-Wasser-Emulsion beinhaltet.

**7.** Verwendung gemäß Anspruch 5, wobei die erste und die zweite Flüssigkeit jeweils anderes als Öl sind.

**8.** Verwendung gemäß Anspruch 1, wobei die Emulsion ferner eine Mischung fester Partikel beinhaltet.

**9.** Verwendung gemäß Anspruch 1, wobei das schraubenförmige Laufrad (11) mit einer Geschwindigkeit von 60 Umdrehungen pro Minute gedreht wird.

**Revendications**

**1.** L'utilisation, dans une méthode de séparation d'un premier liquide d'une émulsion, d'un dispositif coalesceur (70) comprenant :

un récipient (30),
un tube d'aspiration (40), et
un moyen pour causer un flux vertical de fluide (moyen causant un flux vertical) comprenant un agitateur hélicoïdal (11) qui peut tourner et comprend un premier élément hélicoïdal (50), le premier élément hélicoïdal (50) ayant des bords d'attaque et de fuite espacés l'un de l'autre ; un axe longitudinal ; une longueur ($L_e$) le long de son axe longitudinal ; un angle de torsion ($T_e$) allant de 90 degrés (°) à 360° autour de son axe longitudinal ; un diamètre ($D_e$) perpendiculaire à son axe longitudinal ; et étant dimensionné de façon à établir une configuration du premier élément hélicoïdal pouvant être **caractérisé par** une relation mathématique entre chaque $L_e$ et $D_e$ de $D_e \leq L_e \leq 2D_e$,

dans laquelle une émulsion est contenue dans le récipient (30), l'émulsion comprenant un premier liquide dans une phase dispersée et un deuxième liquide dans une phase continue, les premier et deuxième liquides n'étant pas miscibles l'un dans l'autre ; l'émulsion ayant une teneur initiale en deuxième liquide et se trouvant dans la nécessité d'une séparation ; et
dans laquelle le tube d'aspiration (40) est disposé à l'intérieur du récipient (30) et est orienté essentiellement verticalement dans l'émulsion ; et l'agitateur hélicoïdal (50) est disposé à l'intérieur du tube d'aspiration (40) et peut fonctionner pour causer un flux vertical de fluide au travers de celui-ci, le dispositif coalesceur (70) pouvant fonctionner pour coalescer un premier liquide d'une émulsion lorsque l'émulsion est disposée dans le récipient (30) dans un contact de fonctionnement avec le tube d'aspiration (40) et le moyen causant un flux vertical ;
dans laquelle la méthode comprend :

la rotation de l'agitateur hélicoïdal (11) disposé au sein du tube d'aspiration (40) à une vitesse de rotation de 30 à 120 tours par minute et le fait de causer un flux dirigé verticalement de l'émulsion au travers du tube d'aspiration (40) ;

et de ce fait la coalescence ensemble d'au moins une partie du premier liquide de l'émulsion de façon à former une couche de premier liquide coalescé ayant une teneur réduite en deuxième liquide, la teneur réduite en deuxième liquide de la couche de premier liquide coalescé étant inférieure à la teneur initiale en deuxième liquide de l'émulsion.

2. L'utilisation telle que dans la revendication 1, dans laquelle le dispositif coalesceur (70) comprend en outre au moins un récipient supplémentaire (30), au moins un tube d'aspiration supplémentaire (40), au moins un agitateur hélicoïdal supplémentaire (11) selon la revendication 1, et au moins un moyen pour transférer séquentiellement un liquide d'un récipient à un récipient, dans laquelle il y a un tube d'aspiration de la sorte (40) disposé à l'intérieur de chaque récipient (30) et un agitateur hélicoïdal de la sorte (11) disposé à l'intérieur de chaque tube d'aspiration (40) et pouvant fonctionner pour causer un flux vertical de fluide au travers de celui-ci.

3. L'utilisation telle que dans la revendication 1, dans laquelle le moyen causant un flux vertical comprend en outre deux chicanes orientées verticalement ou plus (112), l'agitateur hélicoïdal (11) et deux chicanes orientées verticalement ou plus (112) étant disposés au sein du tube d'aspiration (40) et espacés de celui-ci d'une façon telle que la rotation de l'agitateur hélicoïdal (11) autour d'un axe vertical cause un flux de fluide dirigé verticalement par les deux chicanes orientées verticalement ou plus (112) au travers du tube d'aspiration (40).

4. L'utilisation telle que dans la revendication 1, dans laquelle le dispositif coalesceur (70) comprend en outre un moyen de rotation ; le moyen de rotation étant dans un raccordement de fonctionnement sur l'agitateur hélicoïdal (11) et pouvant fonctionner de manière à causer la rotation de l'agitateur hélicoïdal (11) au sein du tube d'aspiration (40).

5. L'utilisation telle que dans la revendication 1, dans laquelle le premier liquide est une huile ou de l'eau.

6. L'utilisation telle que dans la revendication 5, dans laquelle l'émulsion comprend une émulsion huile-eau.

7. L'utilisation telle que dans la revendication 5, dans laquelle les premier et deuxième liquides sont chacun un élément autre que de l'huile.

8. L'utilisation telle que dans la revendication 1, dans laquelle l'émulsion comprend en outre un mélange de particules solides.

9. L'utilisation telle que dans la revendication 1, dans laquelle l'agitateur hélicoïdal (11) est amené à tourner à une vitesse de 60 tours par minute.

Fig. 1

Fig. 2A

Fig. 2B

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 55132608 A
- US 4981366 A
- DE 3401934 A1
- RE 32562
- US 4454077 A